# EUROPÄISCHE PATENTSCHRIFT

(11) **EP 2 282 825 B1**
(45) Veröffentlichungstag und Bekanntmachung des Hinweises auf die Patenterteilung: **16.03.2016**
(21) Anmeldenummer: 09757345.5
(22) Anmeldetag: 01.04.2009
(51) Int. Cl.: B01D 46/24, B01D 46/52, F02M 35/024

(54) **FILTERSYSTEM**
FILTER SYSTEM
SYSTÈME DE FILTRE

(30) Priorität: 06.06.2008 DE 102008027279
(43) Veröffentlichungstag der Anmeldung: 16.02.2011
(73) Patentinhaber: MANN + HUMMEL GMBH, 71638 Ludwigsburg (DE)
(72) Erfinder: RUHLAND, Klaus-Dieter, 67149 Meckenheim (DE); GILLENBERG, Eric, 67346 Speyer (DE); STEINS, Oliver, 67354 Römerberg (DE)
(86) Internationale Anmeldenummer: PCT/EP2009/053879
(87) Internationale Veröffentlichungsnummer: WO 2009/146962

(56) Entgegenhaltungen:
- EP-A1- 1 354 617
- US-A- 5 484 466
- US-A1- 2004 134 171
- US-A1- 2005 193 694
- US-A1- 2005 193 695

## Beschreibung

### Technisches Gebiet

Die Erfindung betrifft ein Filtersystem insbesondere für eine Brennkraftmaschine, aufweisend ein Filterelement mit einem insbesondere sternförmig gefalteten Filtermedium in vorzugsweise koaxialer Form, mit mindestens einem an einer Stirnseite des Filtermediums angeordneten End- und Dichtkörper aus einer elastischen Vergussmasse. Ferner betrifft die Erfindung ein Filterelement eines solchen Filtersystems und ein Verfahren zur Herstellung eines derartigen Filterelements.

### Stand der Technik

Aus der US 2004/0134171 A1 ist ein Luftfilter mit einem austauschbaren Filterelement bekannt, welches einen äußeren Rahmen mit einem Gewinde aufweist. Aus der DE 42 41 586 C1 ist ein Filtersystem mit einem Filterelement bekannt, bei dem ein sternförmig gefaltetes Filtermedium an seiner Stirnseite einen End- und Dichtkörper aus einer elastischen Vergussmasse aus Polyurethanschaum aufweist. Der End- und Dichtkörper bildet einen Abschluss des Filterelements und wirkt darüber hinaus als Dichtung gegenüber einem Bodenbereich eines Gehäuses für das Filterelement. Eine zusätzliche Dichtung zum Abdichten des Filterelements ist so nicht erforderlich.

Der Erfindung liegt die Aufgabe zugrunde, ein Filtersystem der eingangs genannten Art beziehungsweise ein Verfahren zur Herstellung eines Filterelements des Filtersystems so auszugestalten, das einfach realisierbar ist und eine optimale Filterwirkung ermöglicht, wobei der End- und Dichtkörper die bestmögliche Stabilität und Dichtwirkung haben soll.

### Offenbarung der Erfindung

Diese Aufgabe wird erfindungsgemäß dadurch gelöst, dass in der elastischen Vergussmasse des End- und Dichtkörpers wenigstens ein Teil eines Stützkörpers eingebettet ist.

Erfindungsgemäß ist also ein Stützkörper vorgesehen, der in den End- und Dichtkörper eingebettet ist und diesen damit formstabilisiert und die Steifigkeit verbessert. Dadurch dass der Stützkörper eingebettet ist, wird die Flexibilität des End- und Dichtkörpers nicht eingeschränkt und so dessen Dichtwirkung nicht beeinträchtigt. Ferner wird durch den eingebetteten Stützkörper die Schwingungsstabilität des Filterelements am Dichtsitz verbessert, das der End- und Dichtkörper besser an das Filtermedium angebunden ist.

Erfindungsgemäß weist der eingebettete Teil des Stützkörpers eine Vielzahl von beabstandeten Rippen auf, die sich zwischen zwei koaxialen Ringen des Stützkörpers erstrecken, wobei die Bereiche zwischen den Rippen von der bei einem Herstellungsprozess zunächst fließfähigen Vergussmasse durchflossen werden können und im Endzustand mit der verfestigten Vergussmasse ausgefüllt sind. Die Rippen verleihen dem ansonsten elastischen Endkörper eine optimale Formstabilität, ohne dass dessen Dichtfunktion dadurch beeinträchtigt wird. Dadurch, dass der Zwischenraum zwischen den Rippen von der Vergussmasse durchdrungen wird, entsteht eine zuverlässige und dauerhafte Verbindung zwischen der Vergussmasse und dem Stützkörper. Die Ringe halten die Rippen des Stützkörpers auch vor der Einbettung und sorgen für eine zusätzliche Stabilisierung des fertigen End- und Dichtkörpers.

Um die Formstabilität weiter zu verbessern, verlaufen die Rippen wendelartig gekrümmt. Außerdem erhöht eine dynamische Geometrie der Rippen die Sicherheit beim Herstellungsprozess. Ferner wird erreicht, dass die zunächst fließfähige Vergussmasse die Rippen besser und schneller umfließen kann und damit die gleichmäßige Verteilung der Vergussmasse in den Bereichen zwischen den Rippen verbessert wird und Lufteinschlüsse verhindert werden.

Bei einer vorteilhaften Ausführungsform kann der eingebettete Teil des Stützkörpers sich über die Falten des Filtermediums erstrecken. Auf diese Weise wird das Filtermedium insbesondere über seine radialer Ausdehnung stabilisiert.

Ferner können die Flanken der Rippen abgeschrägt sein. So wird die Sicherheit beim Herstellungsprozess und das Umfließen der Vergussmasse weiter verbessert.

Bei einer weiteren vorteilhaften Ausführungsform kann der radial äußere Ring ein Hohlzylinder sein, wobei die Rippen im Bereich eines Randes des Hohlzylinders angreifen und die Umfangswand des Hohlzylinders das Filtermedium im Bereich von dessen Stirnseite umfänglich umgibt. Die hohlzylindrische Form des äußeren Rings verleiht dem Stützkörper eine zusätzliche Stabilität in axialer Richtung. Mit der Umfangswand kann ferner der Stützkörper vor dem Einbetten des Filtermediums mit dem Stützkörper in die Vergussmasse an dem Filtermedium befestigt werden und mit diesem gemeinsam eingebettet werden. Beim Zusammenbau wird das Filtermedium im Hohlzylinder geführt und zentriert und später mit der Umfangswand des Hohlzylinders gehalten.

Der Stützkörper kann ferner Führungslaschen, insbesondere federnde Rastnasen, aufweisen, die sich axial zum Filtermedium erstrecken. Die Führungslaschen, vorzugsweise die Rastnasen, können in entsprechende Vertiefungen im Filtermedium eingreifen oder auch lediglich durch einen verstärkten Anpressdruck einen verbesserten Halt des Filtermediums im Hohlzylinder erreichen. Dadurch wird die Stabilität des gesamten Filterelements deutlich verbessert, ohne dass die Dichtfunktion des elastischen Endkörpers hiervon beeinträchtigt wird.

Um das Filtermedium in einem Abstand zu dem Stützkörper zu halten, so dass beim Herstellungsprozess die noch fließfähige Vergussmasse zwischen der Stirnseite des Filtermediums und dem Stützkörper durchfließen kann, kann der eingebettete Teil des Stützkörpers Vorsprünge zur Abstützung des Filtermediums aufweisen. Auf diese Weise kann die beim Herstellungsprozess noch fließfähige Vergussmasse optimal in alle Bereiche zwischen dem Stützkörper und dem Filtermedium und zwischen den Falten des Filtermediums eindringen, so dass eine optimale Verbindung zwischen dem Filtermedium, der Vergussmasse und dem Stützkörper und dem Stützkörper und eine optimale Dichtfunktion erreicht wird.

Vorteilhafterweise kann der Stützkörper aus Kunststoff sein. Stützkörper aus Kunststoff sind leicht, können einfach und preiswert hergestellt, beispielsweise gegossen oder gestanzt werden. Auf Metall kann so verzichtet werden.

Die elastische Vergussmasse kann bevorzugt Polyurethanschaum sein. Polyurethanschaum ist beim Herstellungsprozess gut fließfähig und verteilt sich bestmöglich zwischen dem Filtermedium und dem Stützkörper, so dass eine homogene und zuverlässige Verbindung entsteht. Im verfestigten Zustand ist Polyurethanschaum elastisch, so dass eine optimale Dichtwirkung ermöglicht wird.

Bei einem Verfahren zur Herstellung eines Filterelements insbesondere eines derartigen Filtersystems wird die zunächst fließfähige Vergussmasse in eine Gießschale gefüllt, ein Stützkörper an der Stirnseite des Filtermediums befestigt, das Filtermedium mit dem Stützkörper voraus in die Vergussmasse eingebettet und nach der Verfestigung der Vergussmasse die Gießschale von dem Filterelement getrennt. Auf diese Weise kann in wenigen einfachen Verfahrensschritten ein optimal filterndes Filterelement hergestellt werden, dessen Endkörper eine für die ideale Dichtwirkung erforderliche Elastizität aufweist, und durch den Stützkörper eine Formstabilität erreicht, welche für die Filterfunktion und die Dichtfunktion von Vorteil ist.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen
- Figur 1: schematisch einen längsseitigen Schnitt eines Filtersystems mit einem Filterelement, welches einen elastischen End- und Dichtkörper aufweist, in dem ein Stützkörper eingebettet ist;
- Figur 2: schematisch eine Detaildarstellung der Stirnseite des Filterelements aus der Figur 1 mit dem elastischen End- und Dichtkörper;
- Figur 3: schematisch eine isometrische Darstellung der Stirnseite des Filterelements aus den Figuren 1 und 2;
- Figur 4: schematisch eine isometrische Darstellung der Stirnseite des Filterelements aus den Figuren 1 bis 3 mit dem Stützkörper, vor dem Vergießen mit einer elastischen Vergussmasse;
- Figur 5: schematisch eine isometrische Darstellung des Stützkörpers aus den Figuren 1 bis 4;
- Figur 6: eine Seitenansicht einer einen Vorsprung aufweisenden Rippe des Stützkörpers des Filterelements aus den Figuren 1 bis 5;
- Figur 7: eine Profildarstellung von zwei Rippen des Stützkörpers des Filterelements aus den Figuren 1 bis 5;
- Figur 8: schematisch eine isometrische Darstellung eines zweiten Ausführungsbeispiels eines zu dem Stützkörper aus den Figuren 1 bis 7 ähnlichen Stützkörpers ;
- Figur 9: schematisch eine Draufsicht des Stützkörpers aus der Figur 8;
- Figur 10: schematisch eine Detailansicht des Stützkörpers aus den Figuren 8 und 9.

### Ausführungsform(en) der Erfindung

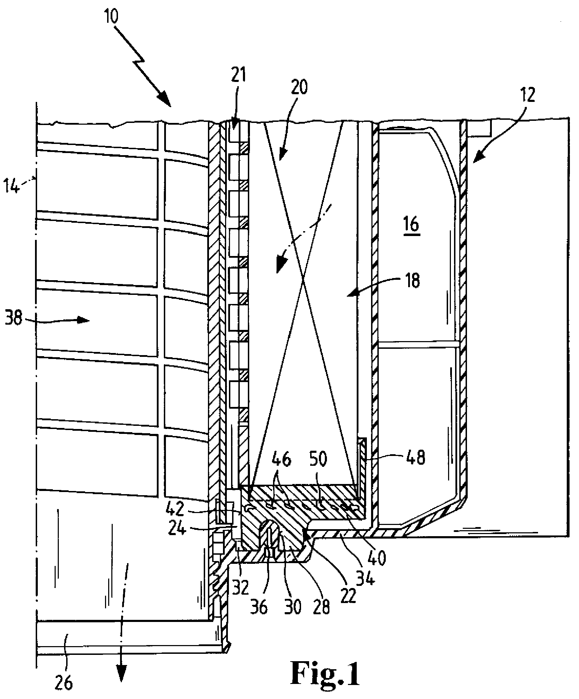

In Figur 1 ist ein hälftiger Ausschnitt eines insgesamt mit dem Bezugszeichen 10 versehenen Filtersystems im Längsschnitt gezeigt. Das Filtersystem 10 umfasst ein Gehäuse 12, welches im Wesentlichen koaxial zu einer Gehäuseachse 14 aufgebaut ist und einen in der Figur 1 nicht gezeigten Einlass aufweist.

Der Einlass ist mit einem radial äußeren Einlassbereich 16 des Gehäuses 12 verbunden. Das Filtersystem 10 dient zur Filterung der Ansaugluft einer nicht gezeigten Brennkraftmaschine. Über den Einlass und den Einlassbereich 16 wird die zu reinigende Luft zugeführt.

Innerhalb des Filtersystems 10 befindet sich koaxial zur Gehäuseachse 14 ein Filterelement 18. Dieses weist ein sternförmig gefaltetes, insgesamt zylindrisches Filtermedium 20 auf. Im Innenraum des Filtermediums 20 ist ein koaxiales Mittelrohr 21 angeordnet, welches eine Vielzahl von Durchlassöffnungen für die gereinigte Luft aufweist.

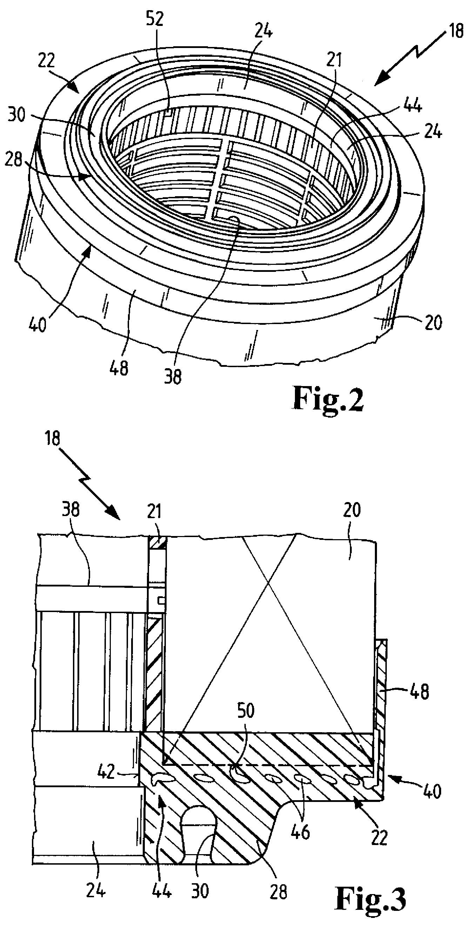

An den Stirnseiten besitzt das Filterelement 18 elastische End- und Dichtkörper 22, von denen in der Figur 1 lediglich der auslassseitige gezeigt ist. Eine Detailansicht der auslassseitigen Stirnseite des Filterelements 18 ist in der Figur 2 gezeigt. Der End- und Dichtkörper 22 weist eine zur Gehäuseachse 14 koaxiale Öffnung 24 auf. Die zu reinigende Luft strömt vom Einlassbereich 16 durch das Filterelement 18 hindurch und gereinigt über einen Auslass 26 des Gehäuses 12 zu der Brennkraftmaschine.

Der End- und Dichtkörper 22 ist aus einer elastischen Vergussmasse aus Polyurethanschaum. Er weist auf seiner dem Filtermedium 20 abgewandten Seite einen zu seiner Mittelachse koaxialen, sich in axialer Richtung erstreckenden Wulst 28 auf. Die Mittelachse des End- und Dichtkörpers 22 fällt in montiertem Zustand des Filtersystems 16 mit der Gehäuseachse 14 zusammen. Die radial innere Flanke des Wulstes 28 bildet die innere Umfangsseite des End- und Dichtkörpers 22 mit. Der Wulst 28 erstreckt sich in radialer Richtung etwa über die Hälfte des End- und Dichtkörpers 22.

Der Wulst 28 weist in seiner dem Filtermedium 20 abgewandten Stirnseite eine Ringnut 30 auf. In eingebautem Zustand des Filterelements 18 korrespondiert der Wulst 28 mit einer entsprechenden Vertiefung 32 in einem Boden 34 des Gehäuses 12. Ein sich axial zur Gehäuseachse 14 erstreckender Ringkragen 36 am Boden 34 greift dabei in die Ringnut 30 ein. Der Wulst 28 und die Ringnut 30 wirken so dichtend mit der Vertiefung 32 und dem Ringkragen 36 zusammen und bilden eine Abdichtung zwischen dem Rohluftbereich (Einlassbereich 16) und dem Reinluftbereich im Inneren 38 des Filterelements 18.

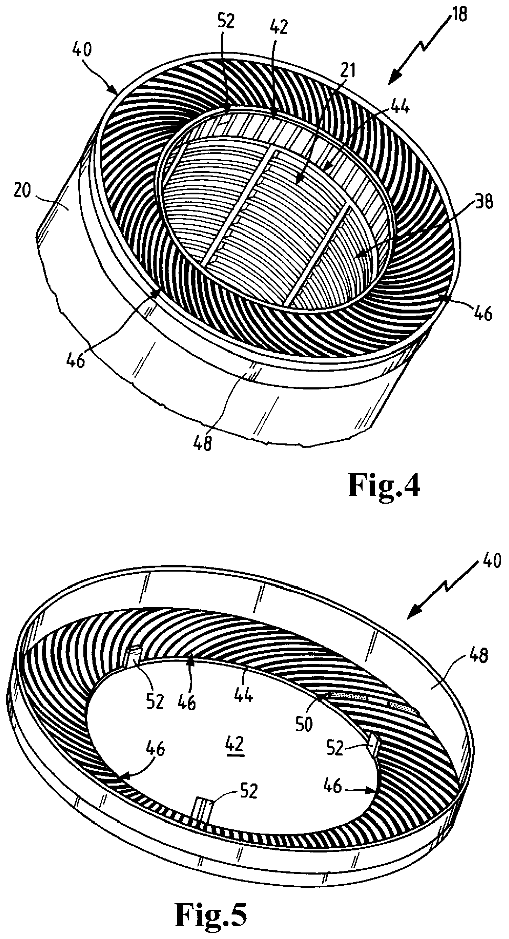

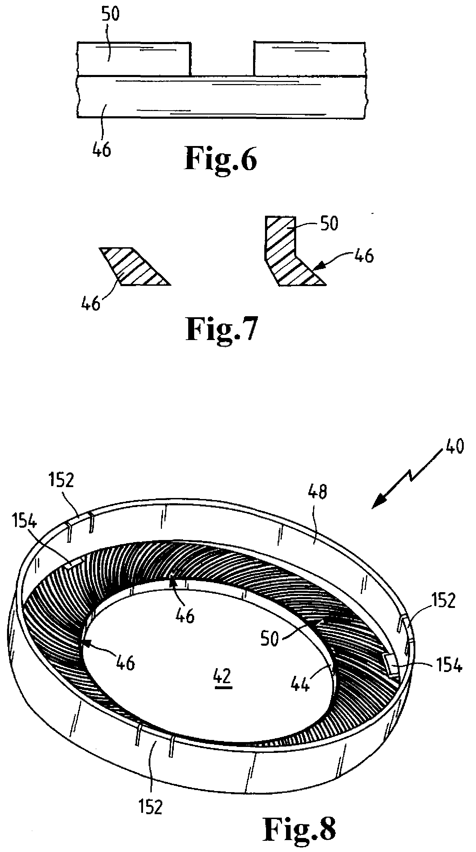

In die Vergussmasse des End- und Dichtkörpers 22 ist ein Stützkörper 40 eingebettet. Der Stützkörper 40 ist im Detail in der Figur 5 gezeigt. Der Stützkörper 40 ist aus einem festen Kunststoff. Er hat im Wesentlichen die Form eines zylindrischen, zur Gehäuseachse 14 koaxialen Topfes, der zum Filtermedium 20 hin offen ist. Der Topfboden weist eine koaxiale Öffnung 42 auf, welche etwas größer ist, als die Öffnung 24 des Gehäuses 12. Die Öffnung 42 im Topfboden ist in radialer Richtung begrenzt durch einen radial inneren Ring 44. Der Topfboden selbst wird gebildet durch eine Vielzahl von beabstandeten Rippen 46, die sich zwischen dem radial inneren Ring 44 und dem Rand eines die Umfangsseite des Stützkörpers 40 bildenden Hohlzylinders 48 erstrecken. Die Rippen 46 sind wendelförmig gekrümmt. Einige der Rippen 46 weisen an ihren dem Topfinneren zugewandten Seiten einstückig angeformte, in Längsrichtung unterbrochene Vorsprünge 50 zur Abstützung des Filtermediums 20 auf. Die Vorsprünge 50 sind über den Topfboden des Stützkörpers 40 verteilt angeordnet. In der Figur 6 ist eine der Rippen 46 mit einem unterbrochenen Vorsprung 50 in einer Seitenansicht gezeigt.

Die seitlichen Flanken der Rippen 46 sind abgeschrägt, so dass beim Herstellungsprozess die zunächst fließfähige Gussmasse gut in die Zwischenbereiche zwischen den Rippen 46 einfließen und diese durchfließen kann. In der Figur 7 sind zwei der Rippen 46 im Profil gezeigt.

An dem radial inneren Ring 44 befinden sich ferner umfänglich verteilt drei Führungslaschen 52, die sich parallel zur Umfangswand 48 erstrecken.

Zur Herstellung des Filterelements 18 wird folgendermaßen verfahren:

Zunächst wird das Mittelrohr 21 im gefalteten Filtermedium 20 platziert und der Stützkörper 40 mit seiner offenen Seite auf die Stirnseite des Filtermediums 20 gesteckt, wie dies in der Figur 4 gezeigt ist. Dabei umgreift die Umfangswand 48 von außen das Filtermedium 20 im Bereich der Stirnseite und die Führungslaschen 52 korrespondieren mit dem Mittelrohr 21. Auf diese Weise wird dem Filterelement 18 bereits jetzt eine gewisse Formstabilität verliehen.

In eine nicht gezeigte Gießschale, welche die äußere Form des End- und Dichtkörpers 22 vorgibt, wird zunächst fließfähiger Polyurethanschaum als Vergussmasse eingefüllt.

Das vormontierte Filtermedium 20 wird mit dem Stützkörper 40 voran in die Vergussmasse in der Gießschale gepresst. Dabei ermöglicht die dynamische Geometrie des Rippen 46, im Besonderen der Abstand zwischen den Rippen 46, deren abgeschrägte Flanken, ihr wendelförmiger Verlauf und die Vorsprünge 50, dass der noch fließfähige Polyurethanschaum schnell sämtliche Zwischenräume ausfüllen kann und in Richtung der Stirnseite des Filtermediums 20 getrieben wird. Der Polyurethanschaum bettet die Rippen 46 des Stützkörpers 40 vollständig ein und erzeugt einen lückenlosen dichten Verbund zwischen dem Stützkörper 40 und dem Filtermediums 20. Nach Verfestigung des Polyurethanschaums wird die Gießschale von dem fertigen Filterelement 18 getrennt, welches nun den festen, aber dennoch elastischen End- und Dichtkörper 22 aufweist, wie in den Figuren 2 und 3 gezeigt.

Das fertige Filterelement 18 kann nun in bekannter Weise in das Gehäuse 12 des in Figur 1 gezeigten Filtersystems 10 eingebracht werden.

Bei dem Filtersystem 10 kann der End- und Dichtkörper 22 anstelle aus Polyurethanschaum auch aus einer anderen elastischen, zunächst fließfähigen Vergussmasse sein.

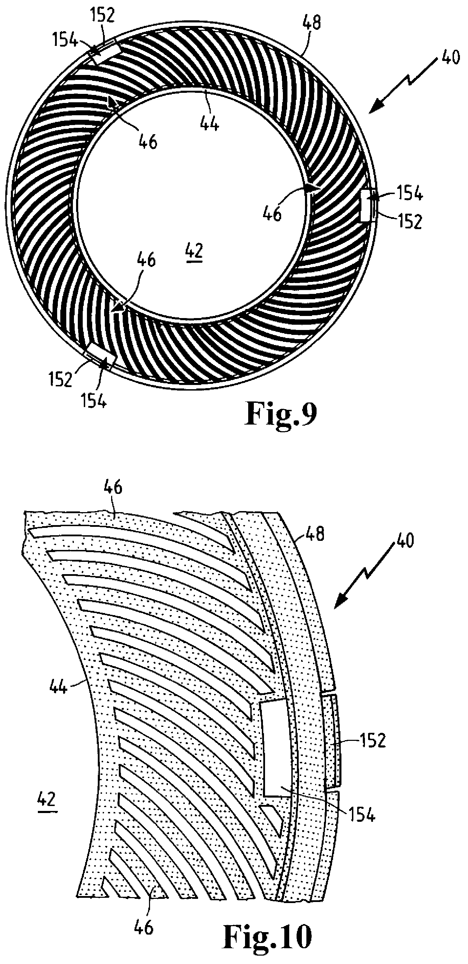

In den Figuren 8 bis 10 ist ein zweites Ausführungsbeispiel eines Stützkörpers 40 gezeigt. Diejenigen Elemente, die zu denen des ersten Ausführungsbeispiels aus den Figuren 1 bis 7 ähnlich sind, sind mit den gleichen Bezugszeichen versehen. Das zweite Ausführungsbeispiel unterscheidet sich von dem ersten dadurch, dass statt der Führungslaschen 52 an dem radial inneren Ring 44 jeweils federnde Führungs- und Haltelaschen 152 in der Umfangswand 48 des Stützkörpers 40 vorgesehen sind. Die Führungs- und Haltelaschen 152 weisen an ihren dem Topfboden abgewandten Rand sich radial nach innen erstreckende Rastnasen auf.

In der Rippengeometrie des Topfbodens befindet sich radial außen in axialer Richtung fluchtend mit den Führungs- und Haltelaschen 152 jeweils ein Fenster 154, welche zur Entformung der Führungs- und Haltelaschen 152 dienen.

## Patentansprüche

1. Filterelement (18) mit einem insbesondere sternförmig gefalteten Filtermedium (20) in vorzugsweise koaxialer Form, mit mindestens einem an einer Stirnseite des Filtermediums (20) angeordneten End- und Dichtkörper (22) aus einer elastischen Vergussmasse, wobei in der elastischen Vergussmasse des End- und Dichtkörpers (22) wenigstens ein Teil eines Stützkörpers (40) eingebettet ist, **dadurch gekennzeichnet, dass** der eingebettete Teil des Stützkörpers (40) eine Vielzahl von wendelartig gekrümmt verlaufenden, beabstandeten Rippen (46) aufweist, die sich zwischen zwei koaxialen Ringen (44, 48) des Stützkörpers (40) erstrecken, wobei die Bereiche zwischen den Rippen (46) von der bei einem Herstellungsprozess zunächst fließfähigen Vergussmasse durchflossen werden können und im Endzustand mit der verfestigten Vergussmasse ausgefüllt sind.

2. Filterelement nach Anspruch 1, **dadurch gekennzeichnet, dass** der eingebettete Teil des Stützkörpers (40) sich über die Falten des Filtermediums (20) erstreckt.

3. Filterelement nach Anspruch 1 oder 2, **dadurch gekennzeichnet, dass** die Flanken der Rippen (46) abgeschrägt sind.

4. Filterelement nach einem der Ansprüche 1 bis 3, **dadurch gekennzeichnet, dass** der radial äußere Ring ein Hohlzylinder (48) ist, wobei die Rippen (46) im Bereich eines Randes des Hohlzylinders (48) angreifen und die Umfangswand des Hohlzylinders (48) das Filtermedium (20) im Bereich von dessen Stirnseite umfänglich umgibt.

5. Filterelement nach einem der vorigen Ansprüche, **dadurch gekennzeichnet, dass** der Stützkörper (40) Führungslaschen (52; 152), insbesondere federnde Rastnasen, aufweist, die sich axial zum Filtermedium (20) erstrecken.

6. Filterelement nach einem der vorigen Ansprüche, **dadurch gekennzeichnet, dass** der eingebettete Teil des Stützkörpers (40) Vorsprünge (50) zur Abstützung des Filtermediums (20) aufweist.

7. Filterelement nach einem der vorigen Ansprüche, **dadurch gekennzeichnet, dass** der Stützkörper (40) aus Kunststoff ist.

8. Filterelement nach einem der vorigen Ansprüche, **dadurch gekennzeichnet, dass** die elastische Vergussmasse Polyurethanschaum ist.

9. Filtersystem (10) insbesondere für eine Brennkraftmaschine, aufweisend ein Filterelement (18) nach einem der vorhergehenden Ansprüche.

10. Verfahren zur Herstellung eines Filterelements (18) insbesondere für eine Brennkraftmaschine mit einem insbesondere sternförmig gefalteten Filtermedium (20) in vorzugsweise koaxialer Form, mit mindestens einem an einer Stirnseite des Filtermediums (20) angeordneten End- und Dichtkörper (22) aus einer elastischen Vergussmasse, insbesondere eines Filterelements (18) eines Filtersystems (10) nach einem der vorigen Ansprüche, **dadurch gekennzeichnet, dass** die zunächst fließfähige Vergussmasse für den End- und Dichtkörper (22) in eine Gießschale gefüllt, ein Stützkörper (40) an der Stirnseite des Filtermediums (20) befestigt, das Filtermedium (20) mit dem Stützkörper (40) voraus in die Vergussmasse eingebettet und nach der Verfestigung der Vergussmasse die Gießschale von dem Filterelement (18) getrennt wird, wobei der eingebettete Teil des Stützkörpers (40) eine Vielzahl von wendelartig gekrümmt verlaufenden, beabstandeten Rippen (46) aufweist, die sich zwischen zwei koaxialen Ringen (44, 48) des Stützkörpers (40) erstrecken, wobei die Bereiche zwischen den Rippen (46) von der bei einem Herstellungsprozess zunächst fließfähigen Vergussmasse durchflossen werden können und im Endzustand mit der verfestigten Vergussmasse ausgefüllt sind.

## Claims

1. Filter element (18) with an in particular star-shaped folded filter medium (20) having a preferably coaxial form, with at least one end and sealing body (22) made of a resilient casting compound disposed on a front side of the filter medium (20), wherein at least one part of a support structure (40) is embedded in the resilient casting compound of the end and sealing body (22), **characterized in that** the embedded part of the support structure (40) features a plurality of helically curved extending ribs (46) spaced apart which extend between two coaxial rings (44, 48) of the support structure (40), wherein the areas between the ribs (46) can be flowed through by the casting compound initially fluid during a manufacturing process and are filled in the final state with the solidified casting compound.

2. Filter element according to claim 1, **characterized in that** the embedded part of the support structure (40) extends across the folds of the filter medium (20).

3. Filter element according to claim 1 or 2, **characterized in that** the flanks of the ribs (46) are chamfered.

4. Filter element according to one of the claims 1 to 3, **characterized in that** the radial outer ring is a hollow cylinder (48), wherein the ribs (46) engage in the area of an edge of the hollow cylinder (48) and the peripheral wall of the hollow cylinder (48) surrounds the filter medium (20) circumferentially in the area of its front side.

5. Filter element according to one of the above claims, **characterized in that** the support structure (40) features guide tabs (52; 152), in particular spring-loaded latching lugs, extending axially relative to the filter medium (20).

6. Filter element according to one of the above claims, **characterized in that** the embedded part of the support structure (40) features protrusions (50) supporting the filter medium (20).

7. Filter element according to one of the above claims, **characterized in that** the support structure (40) is made of synthetic material.

8. Filter element according to one of the above claims, **characterized in that** the resilient casting compound is polyurethane foam.

9. Filter system (10) in particular for an internal combustion engine, featuring a filter element (18) according to one of the above claims.

10. Method for manufacturing a filter element (18) in particular for an internal combustion engine with an in particular star-shaped folded filter medium (20) having a preferably coaxial form, with at least one end and sealing body (22) made of a resilient casting compound disposed on a front side of the filter medium (20), in particular of a filter element (18) of a filter system (10) according to one of the above claims, **characterized in that** the initially fluid casting compound for the end and sealing body (22) is filled into a casting mold, that a support structure (40) is attached to the front side of the filter medium (20), that the filter medium (20) is embedded with the support structure (40) first in the casting compound and that the casting mold is separated from the filter element (18) after the solidification of the casting compound, wherein the embedded part of the support structure (40) features a plurality of helically curved extending ribs (46) spaced apart which extend between two coaxial rings (44, 48) of the support structure (40), wherein the areas between the ribs (46) can be flowed through by the casting compound initially fluid during a manufacturing process and are filled in the final state with the solidified casting compound.

## Revendications

1. Élément filtrant (18) avec un milieu filtrant (20) notamment plié en forme d'étoile, de préférence en forme coaxiale, avec au moins un corps d'extrémité et d'étanchéité (22) fait d'une masse de scellement élastique et disposé sur une face frontale du milieu filtrant (20), au moins une partie d'un élément d'appui (40) étant incorporée dans la masse de scellement élastique du corps d'extrémité et d'étanchéité (22), **caractérisé en ce que** la partie incorporée de l'élément d'appui (40) présente de nombreuses nervures (46) courbées, évoluant en forme de spirale et espacées, lesquelles s'étendent entre deux bagues (44, 48) coaxiales de l'élément d'appui (40), les zones situées entre les nervures (46) pouvant être parcourues par la masse de scellement, fluide dans un premier temps, au cours d'un processus de fabrication et étant remplies, au stade final, de la masse de scellement solidifiée.

2. Élément filtrant selon la revendication 1, **caractérisé en ce que** la partie incorporée de l'élément d'appui (40) s'étend au-dessus des plis du milieu filtrant (20).

3. Élément filtrant selon la revendication 1 ou 2, **caractérisé en ce que** les flancs des nervures (46) sont biseautés.

4. Élément filtrant selon l'une des revendications 1 à 3, **caractérisé en ce que** la bague radiale extérieure est un cylindre creux (48), les nervures (46) étant en prise à proximité d'un bord du cylindre creux (48) et la paroi circonférentielle du cylindre creux (48) entourant la circonférence du milieu filtrant (20) à proximité de la face frontale dudit milieu.

5. Élément filtrant selon l'une des revendications précédentes, **caractérisé en ce que** l'élément d'appui (40) est pourvu de pattes de guidage (52 ; 152), en particulier de becs d'encliquetage élastiques, évoluant en sens axial par rapport au milieu filtrant (20).

6. Élément filtrant selon l'une des revendications précédentes, **caractérisé en ce que** la partie incorporée de l'élément d'appui (40) comporte des protubérances (50) servant d'appui au milieu filtrant (20).

7. Élément filtrant selon l'une des revendications précédentes, **caractérisé en ce que** l'élément d'appui (40) est en matière plastique.

8. Élément filtrant selon l'une des revendications précédentes, **caractérisé en ce que** la masse de scellement élastique est une mousse polyuréthane.

9. Système de filtre (10), notamment pour un moteur à combustion interne, présentant un élément filtrant (18) selon l'une des revendications précédentes.

10. Procédé de fabrication d'un élément filtrant (18) notamment pour un moteur à combustion interne, avec un milieu filtrant (20), notamment plié en forme d'étoile, de préférence en forme coaxiale, avec au moins un corps d'extrémité et d'étanchéité (22) fait d'une masse de scellement élastique et disposé sur une face frontale du milieu filtrant (20), en particulier d'un élément filtrant (18) d'un système de filtre (10) selon l'une des revendications précédentes, **caractérisé en ce que** la masse de scellement, fluide dans un premier temps, pour le corps d'extrémité et d'étanchéité (22) est remplie dans un panier de coulée, qu'un élément d'appui (40) est fixé sur la face frontale du milieu filtrant (20), que le milieu filtrant (20) est incorporé, précédé de l'élément d'appui (40), dans la masse de scellement et que, la masse de scellement une fois solidifiée, le panier de coulée est séparé de l'élément filtrant (18), la partie incorporée de l'élément d'appui (40) présentant de nombreuses nervures (46) courbées, évoluant en forme de spirale et espacées, lesquelles s'étendent entre deux bagues (44, 48) coaxiales de l'élément d'appui (40), les zones situées entre les nervures (46) pouvant être parcourues par la masse de scellement, fluide dans un premier temps, au cours d'un processus de fabrication et étant remplies, au stade final, de la masse de scellement solidifiée.
